# EUROPÄISCHE PATENTSCHRIFT

(11) **EP 0 530 403 B1**
(45) Veröffentlichungstag und Bekanntmachung des Hinweises auf die Patenterteilung: **10.05.1995**
(21) Anmeldenummer: 91119266.4
(22) Anmeldetag: 12.11.1991
(51) Int. Cl.: B62J 7/04

(54) **Gepäckträger für ein Zweirad, insbesondere ein Fahrrad**
Luggage carrier for a two wheeled vehicle, particularly a bicycle
Porte-bagage pour un véhicule à deux roues, particulièrement une bicyclette

(30) Priorität: 06.09.1991 DE 4129729
(43) Veröffentlichungstag der Anmeldung: 10.03.1993
(73) Patentinhaber: Aug. Winkhaus GmbH & Co. KG, D-48291 Telgte (DE)
(72) Erfinder: Kortenbrede, Ludger, W-4404 Telgte (DE)
(74) Vertreter: Weickmann, Heinrich, Dipl.-Ing.

(56) Entgegenhaltungen:
- EP-A- 0 343 321
- CH-A- 309 083
- DE-A- 3 324 621
- DE-C- 50 346
- DE-C- 616 511
- DE-U- 9 100 567
- GB-A- 721 733
- US-A- 4 383 625
- US-A- 4 429 818

## Beschreibung

Die Erfindung betrifft einen Gepäckträger für ein Zweirad, umfassend einen Tragrahmen, mit dem Tragrahmen verbundene Tragrahmenstützen zur Abstützung des Tragrahmens am Zweiradrahmen, insbesondere in dessen Nabenbereich, und Verbindungsmittel zwischen dem Tragrahmen und einem Gabelstabpaar des Zweiradrahmens, welches vom oberen Endbereich eines Sattelrohrs des Zweiradrahmens zum Nabenbereich des Zweiradrahmens verläuft.

Zweiradrahmen werden im Hinblick auf optimale Anpassung an Körpergrößen und individuelle Bedürfnisse von Radfahrern in einer Vielzahl von Größen und Formabstufungen hergestellt. Dies macht es bei der Komponentenherstellung und insbesondere bei der Gepäckträgerherstellung notwendig, eine Vielzahl von angepassten Komponenten bzw. Gepäckträgern zu fertigen, auf Lager zu halten und zu vertreiben.

Der Erfindung liegt die Aufgabe zugrunde, einen Gepäckträger anzugeben, der sich in weiten Grenzen an unterschiedliche Zweiradrahmengrößen und -formen anpassen läßt, so daß es mit einer einzigen oder mit einigen wenigen Gepäckträgerausführungen möglich ist, die gesamte Skala der Zweiradrahmengrößen und -formen abzudecken.

Zur Lösung dieser Aufgabe wird erfindungsgemäß vorgeschlagen, daß die Verbindungsmittel mindestens ein Schwenkteil umfassen, welches mit einem ersten Ende an dem Tragrahmen um eine zur vertikalen Längsmittelebene des Tragrahmens im wesentlichen orthogonale Schwenkachse schwenkbar und in Längsrichtung des Tragrahmens gegenüber diesem verstellbar und feststellbar ist und welches mit einem zweiten Ende an dem Gabelstabpaar festlegbar ist.

Bei der erfindungsgemäßen Ausbildung ist es insbesondere möglich, durch das Längsverschieben des Schwenkteils in Längsrichtung des Tragrahmens eine Anpassung an verschiedene Neigungen des Gabelstabpaars vorzusehen und durch unterschiedliche Schwenkeinstellungen des Schwenkteils um die orthogonale Schwenkachse die jeweils vorgegebene Befestigungsstelle am rückwärtigen Stabpaar zu finden. Auf diese Weise läßt sich sicherstellen, daß die Neigung der Lastaufnahmeebene des Tragrahmens gegenüber der Horizontalen jeweils wunschentsprechend eingestellt werden kann, insbesondere in Parallelität zur Horizontale oder mit geringfügiger Neigung nach vorne und unten.

Es ist grundsätzlich möglich, zwei Einzelschwenkarme vorzusehen, welche in Richtung der Schwenkachse voneinander Abstand haben. In diesem Fall können die zweiten Enden der Einzelschwenkarme in je einem Gabelstab des Gabelstabpaars befestigt werden, etwa in der Weise, daß die zweiten Enden der Einzelschwenkarme in eine zu der Ebene des Gabelstabpaars annähernd parallele Ebene abgewinkelt sind und daß diese abgewinkelten zweiten Enden der Einzelschwenkarme mit Schraubenaufnahmelöchern versehen sind, welche in Flucht zu je einem Schraubenaufnahmeloch eines Gabelstabs bringbar und danach durch Schraubbolzen mit dem jeweiligen Gabelstab verbindbar sind.

Ein noch bestehender Anpassungsbedarf kann dabei dadurch erfüllt werden, daß die abgewinkelten zweiten Enden der Einzelschwenkarme gegenüber der Hauptlängserstreckung der Einzelschwenkarme insbesondere durch Materialverbiegung schwenkbar sind. Die Einzelschwenkarme können mit ihren ersten Enden an den Längsstäben des jeweiligen Tragrahmens angeordnet sein.

Nach einer anderen und bevorzugten Ausführungsform ist vorgesehen, daß das Schwenkteil von einem annähernd U-förmigen Schwenkbügel gebildet ist, dessen Schenkel erste mit dem Tragrahmen verbundene Enden bilden und dessen Steg ein zweites mit dem Gabelstabpaar verbindbares Ende bildet. In diesem Fall kann an dem Steg eine Montagelasche zur Verbindung mit dem Gabelstabpaar und insbesondere zur Verbindung mit einer Überbrückungslasche (Pletschersteg) des Gabelstabpaars angebracht werden. Die Montagelasche kann hierzu mit mindestens einem Befestigungsloch ausgeführt sein, welches in Flucht mit einem Befestigungsloch des Überbrückungsstegs bringbar ist, worauf ein Befestigungsbolzen in die miteinander fluchtenden Befestigungslöcher einführbar ist.

Ein zusätzlicher Anpassungsbedarf kann hierbei dadurch erfüllt werden, daß die Montagelasche gegenüber der U-Bügelebene des U-bügelförmigen Schwenkteils verschwenkbar ist. Diese Verschwenkbarkeit kann entweder durch Verbiegen gewährleistet werden oder dadurch, daß die Montagelasche auf dem Steg des U-Bügels schwenkbar gelagert ist. Eine schwenkbare Montagelasche läßt sich leicht dadurch bereitstellen, daß die Montagelasche von einem doppeltgelegten Blechstreifen gebildet ist, welcher im Scheitelbereich zu einem Lagerauge erweitert ist.

Das erste, das heißt das dem Tragrahmen zugekehrte, Ende des Schwenkteils kann in einem Schwenk- und Schiebeblock schwenkbar gelagert sein, wobei dieser Schwenk- und Schiebeblock auf einem Längsstab des Tragrahmens verschiebbar und feststellbar geführt sein kann, insbesondere auf einem von zwei seitlichen Längsbegrenzungsstäben des Tragrahmens. Die Feststellung des Schwenk- und Schiebeblocks auf dem jeweiligen Längsstab kann durch Kraft oder/und durch Formschluß erfolgen, etwa in der Weise, daß der Schwenk- und Schiebeblock eine teilweise offene Schiebeführung für den jeweiligen Längsstab aufweist und daß der Öffnungsbereich dieser Schiebeführung durch eine Klemmplatte abgedeckt ist, welche durch eine Klemmschraube gegen den jeweiligen Längsstab andrückbar ist. Dabei können zur formschlüssigen Sicherung an der Klemmplatte und dem jeweiligen Längsstab zusammenwirkende Verrastungsmittel angebracht sein, beispielsweise Verrastungsrippen an der Klemmplatte und Verrastungskerben an dem jeweiligen Längsstab.

Die schwenkbare Lagerung des ersten Endes des Schwenkteils in dem mindestens einen Schwenk- und Schiebeblock kann vermittels einer Klemmschraube erfolgen, welche neben der Lagerfunktion auch die Funktion hat, den Schwenk- und Schiebeblock auf dem jeweiligen Längsstab zu fixieren. Dabei kann das erste Ende des Schwenkteils in einem durch die Klemmschraube einengbaren Aufnahmeschlitz des Schwenk- und Schiebeblocks aufgenommen sein, etwa in der Weise, daß die Klemmschraube mit einem Ende, insbesondere mit einem Schraubenkopf, an einer Klemmplatte zum Eingriff mit dem jeweiligen Längsstab angreift und mit ihrem anderen Ende, insbesondere mit einer Mutter, gegen eine Begrenzungswand eines das erste Ende des Schwenkteils aufnehmenden Schlitzes anliegt.

Es ist nicht unbedingt erforderlich, in betriebsbereitem Zustand den Schwenkteil am Tragrahmen gegen Verschwenken festzulegen. Die Entscheidung, ob eine Festlegung gegen Schwenkung zu erfolgen hat, hängt von der Gesamtkinematik des Gepäckträgers ab. Sind die Tragrahmenstützen des Gepäckträgers mit dem Tragrahmen starr verbunden, so wird es in der Regel nicht notwendig sein, das Schwenkteil bzw. die Schwenkteile im Betrieb gegen Verschwenken relativ zum Tragrahmen zu sichern, weil dann nämlich auch bei dem nicht am Schwenken gehinderten Schwenkteil ein starres kinematisches System geschaffen wird, welches aus dem Stabpaar des Zweiradrahmens, dem Schwenkteil, dem Tragrahmen und den Tragrahmenstützen besteht. Sind aber die Tragrahmenstützen an dem Tragrahmen schwenkbar angeordnet, so daß sie für den Transport an die Tragrahmenebene beigeklappt werden können, so wird es zur eindeutigen und unbeweglichen Festlegung des Gepäckträgers am Zweiradrahmen in der Regel notwendig sein, den Schwenkteil bzw. die Schwenkteile im Betriebszustand gegen Verschwenken relativ zum Tragrahmen um die orthogonale Schwenkachse zu sperren. Dieses Sperren kann - wie schon angedeutet - dadurch erfolgen, daß das erste Ende bzw. die ersten Enden des Schwenkteils bzw. der Schwenkteile an dem Schwenk- und Schiebeblock festgeklemmt, insbesondere in dessen Aufnahmeschlitz eingeklemmt werden, bevorzugt durch die gleiche Klemmschraube, die auch der Schwenklagerung des jeweiligen Schwenkteils und der Verschiebesicherung des jeweiligen Schwenk- und Schiebeblocks dient.

Der Tragrahmen kann mit allen üblichen Befestigungsmitteln zum Befestigen von Transportgut auf dem Tragrahmen ausgerüstet sein. Er kann ferner als Träger für seitliche Gepäcktaschen ausgebildet sein. Darüber hinaus kann der Tragrahmen - wie aus der deutschen Gebrauchsmusterschrift 91 00 567 an sich bekannt - als Träger für ein Fahrradschloß, insbesondere ein Bügelschloß, ausgebildet sein. Im Hinblick auf diese letztere Funktion ist es denkbar, daß an dem Tragrahmen unterhalb von dessen Gepäcktragfläche eine Schiebeführung für einen U-Bügel eines Bügelschlosses angebracht ist, vorzugsweise so, daß das Bügelschloß vom rückwärtigen Ende des Tragrahmens her in Längsrichtung des Tragrahmens in die Schiebeführung einschiebbar ist bis zum Anschlagen eines Schloßkörpers des Bügelschlosses an einem Anschlag des Tragrahmens und vorzugsweise bis zum Einrasten einer das unbeabsichtigte Austreten des Bügelschlosses aus der Schiebeführung verhindernden Sicherung.

Mit Hilfe der erfindungsgemäß vorgeschlagenen verschwenkbaren, verschiebbaren und feststellbaren Schwenkteile kann man - wie schon weiter oben festgestellt - eine weite Skala von Zweiradrahmenformen und -größen überdecken. Es ist sogar möglich, mit ein und demselben Modell eines erfindungsgemäßen Gepäckträgers Zweiradrahmen mit unterschiedlichen Radgrößen von zum Beispiel 26'' und 28'' zu bedienen. Dem kommt gelegentlich auch entgegen, daß bei Fahrrädern mit 26''-Rädern verhältnismäßig starke Bereifungen und auch verhältnismäßig auftragende Schutzblechkonstruktionen (Mountain-Bikes) vorgesehen sind, so daß die grundsätzlich für 28''-Räder bemessenen Tragrahmenstützen häufig auch passend sind für Zweiräder mit 26''-Rädern. Es ist aber zur weiteren Anpassung auch möglich, die Tragrahmenstützen längsveränderlich zu machen, beispielsweise teleskopisch längsveränderlich und auf die jeweilige gewünschte Länge feststellbar. Auf diese Weise wird ein Universalgepäckträger erreicht, der unabhängig von der Radausstattung des jeweiligen Zweirads und unabhängig von der Rahmenform und Rahmengröße des jeweiligen Zweirads eingesetzt werden kann.

Die beiliegenden Figuren erläutern die Erfindung anhand eines Ausführungsbeispiels; es stellen dar:
- Figur 1: eine Seitenansicht der rückwärtigen Partie eines Fahrrads mit einem erfindungsgemäß ausgebildeten Gepäckträger;
- Figur 2: eine Draufsicht auf den Gepäckträger der Figur 1 in Pfeilrichtung II der Figur 1;
- Figur 3: eine vergrößerte Seitensicht zu Figur 1 im Bereich III der Figur 1;
- Figur 4: eine Ansicht einer Montagelasche in Pfeilrichtung IV der Figur 2;
- Figur 5: eine vergrößerte Ansicht des Bereichs V der Figur 3 und
- Figur 6: einen Schnitt nach Linie VI-VI der Figur 5.

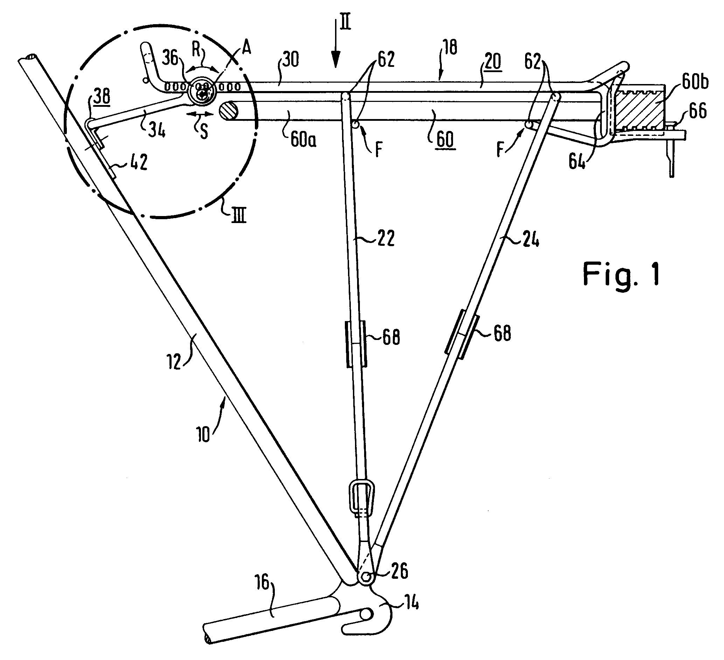

In Figur 1 ist der Zweiradrahmen ganz allgemein mit 10 bezeichnet. Man erkennt ein erstes Stabpaar 12, welches von einer Hinterradlagerstelle 14 zu dem oberen Endbereich eines Sattelrohrs führt und ein zweites Stabpaar 16, welches von der Hinterradlagerstelle 14 zum Tretlager führt.

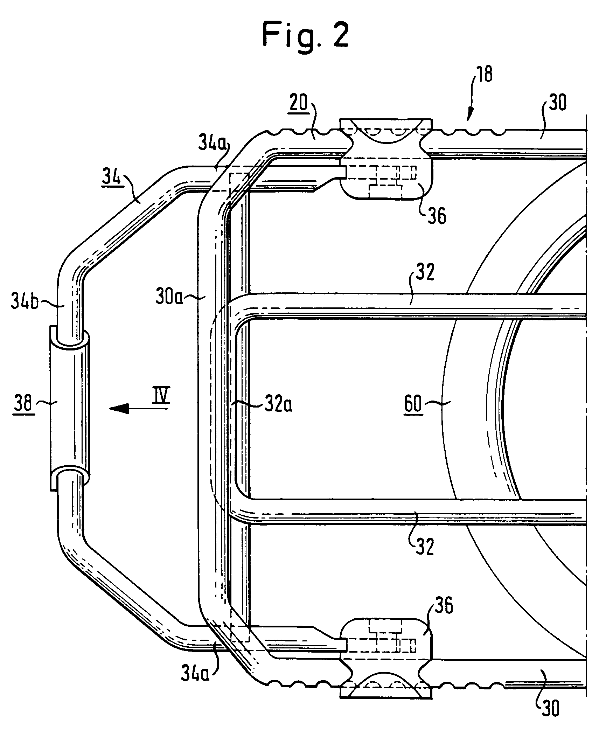

Der Gepäckträger ist ganz allgemein mit 18 bezeichnet. Dieser Gepäckträger 18 umfaßt einen Tragrahmen 20 und zwei Tragrahmenstützenpaare 22 und 24. Die Tragrahmenstützenpaare 22 und 24 sind im Beispielsfall an dem Tragrahmen 20 starr angebracht und führen zu der Hinterradlagerstelle 14, wo sie durch besondere Schrauben 26 befestigt sein können. Es soll aber auch nicht ausgeschlossen sein, daß die Tragrahmenstützenpaare 22,24 durch die Befestigungsmittel befestigt werden, welche der Festlegung des Hinterrads im Bereich der Hinterradlagerstelle 14 dienen. Der Tragrahmen 20 ist - wie in Figur 2 erkennbar - mit zwei äußeren Längsstäben 30 und zwei inneren Längsstäben 32 ausgeführt, die an ihren in Fahrtrichtung vorderen Enden jeweils durch einen Quersteg 30a bzw. 32a miteinander U-förmig verbunden sind und auch untereinander verbunden sein können. An den äußeren Längsstäben 30 ist - wie grundsätzlich bereits aus Figur 1 zu ersehen - ein Schwenkteil 34 angebracht, das um eine zur Längsmittelebene des Gepäckträgers orthogonale Schwenkachse A in der Richtung des Doppeldrehpfeils R schwenkbar ist und in der Richtung des Doppelpfeils S verschiebbar ist. In jeder Verschiebestellung ist das Schwenkteil 34 gegenüber dem Tragrahmen 20 feststellbar. Das Schwenkteil 34 ist - wie aus Figur 2 ersichtlich - als ein U-Bügel ausgebildet, dessen Schenkel 34a durch einen Steg 34b miteinander verbunden sind. Die freien Enden der Schenkel 34a sind in je einem Schwenk- und Schiebeblock 36 schwenkbar gelagert. Die Schwenk- und Schiebeblöcke 36 sind in Längsrichtung der äußeren Lenkstäbe 30 verschiebbar und feststellbar.

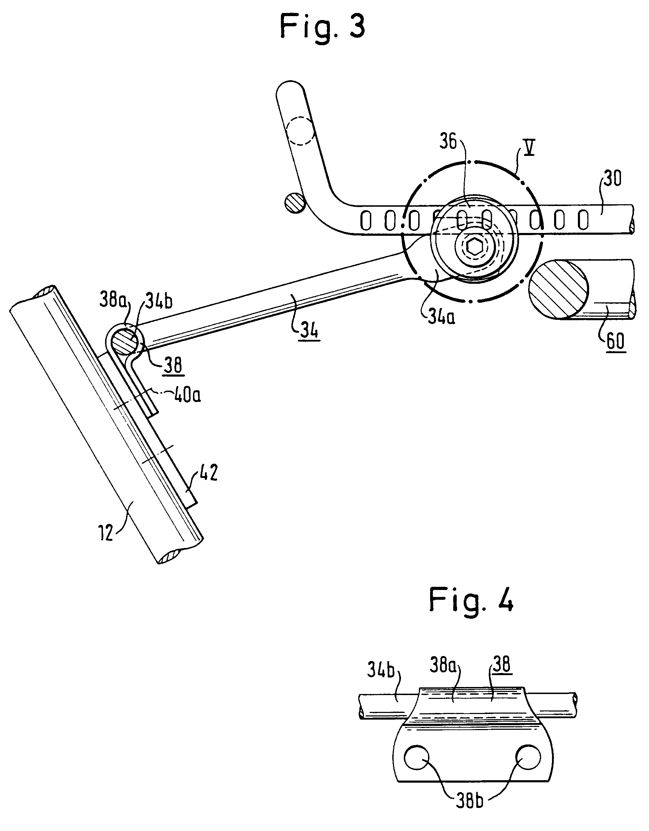

Auf dem Stegteil 34b des Schwenkteils 34 ist eine Montagelasche 38 angebracht, die im einzelnen aus Figur 3 und 4 zu ersehen ist. Die Montagelasche 38 ist aus doppeltgelegtem Blech hergestellt, welches an der Scheitelstelle ein den Stegteil 34b gelenkig umschließendes Lagerauge 38a bildet. Die Montagelasche 38 ist - wie aus Figur 3 zu ersehen - durch Befestigungsschrauben 40a an einem Überbrückungssteg 42 des Stabpaars 12 befestigbar. Die Befestigungsschrauben 40a durchsetzen dabei Befestigungslöcher 38b der Montagelasche 38.

Ein Blick auf die Figur 1 läßt ohne weiteres erkennen, daß trotz der im Beispielsfall vorliegenden starren Verbindung der Tragrahmenstützen 22 und 24 mit dem Tragrahmen 20 eine Anpassung an jede beliebige Neigung des Stabpaars 12 und an jede beliebige Höhenlage des Überbrückungsstegs 42 möglich ist, wobei noch insoweit ein Freiheitsgrad besteht, als gewünschte Neigungen des Tragrahmens 20 gegenüber der Horizontalen eingestellt werden können, insbesondere geringfügige Neigungen nach vorn und unten, wie sie bei Gepäckträgern häufig erwünscht und üblich sind.

Ferner läßt ein Blick auf die Figur 1 erkennen, daß bei starrer Verbindung der Tragrahmenstützen 22,24 mit dem Tragrahmen 20 eine eindeutige Lage des Gepäckträgers 18 gegenüber dem Zweiradrahmen 10 bereits dann gegeben ist, wenn nach Einstellung des Gepäckträgers 18 in eine gewünschte Lage die Achse A in der Verschieberichtung S längs des Tragrahmens 20 festgestellt wird; anders ausgedrückt: im Beispielsfall ist eine Drehblockierung des Schwenkteils 34 gegenüber dem Tragrahmen 20 nicht erforderlich, um den Gepäckträger 18 in eindeutiger Lage am Zweiradrahmen 10 unverrückbar festzulegen.

Da aber grundsätzlich auch Gepäckträgerkonstruktionen in Betracht gezogen werden, bei denen die Tragrahmenstützen 22,24 am Tragrahmen 20 schwenkbar angebracht sind, so daß sie in der Zeichenebene der Figur 1 an den Tragrahmen 20 beigeklappt werden können, besteht auch die Möglichkeit, das Schwenkteil 34 um die Drehachse A gegenüber dem Tragrahmen 20 festzulegen.

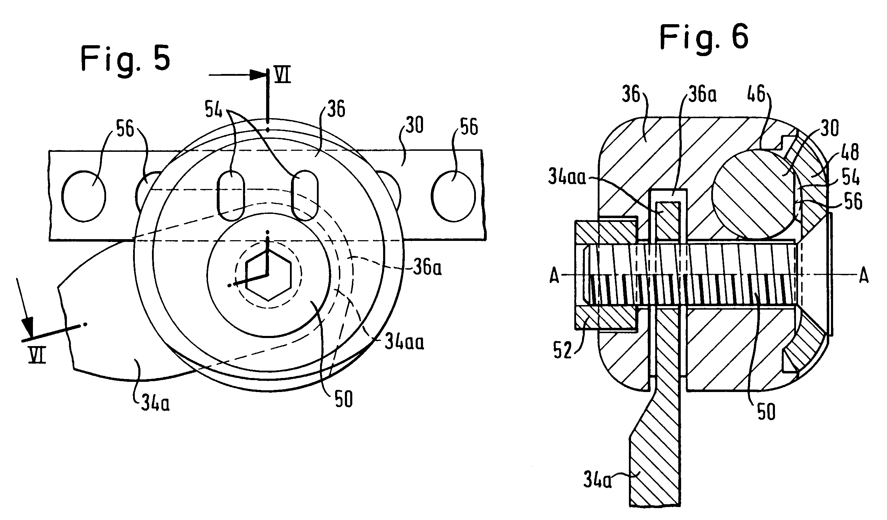

Es wird nun auf die Figuren 3,5 und 6 verwiesen. Man erkennt dort in Zuordnung zu jedem der äußeren Längsstäbe 30 und zu jedem der Schenkel 34a des Schwenkteils 34 je einen Schwenk- und Schiebeblock 36. Der Schwenk- und Schiebeblock 36 weist eine Führung 46 auf, welche auf dem zugehörigen Längsstab 30 verschiebbar ist, in Figur 6 aber nach rechts hin offen ist. Der Schwenk- und Schiebeblock 36 ist an seiner in Figur 6 rechten Begrenzungsfläche durch eine Klemmplatte 48 abgedeckt, welche durch eine Klemmschraube 50 mit dem Schwenk- und Schiebeblock 36 verklemmt ist. Die Klemmschraube 50, welche als Imbusschraube mit Senkkopf ausgebildet ist, arbeitet mit einer Klemmutter 52 zusammen, welche vorzugsweise als Mehrkantmutter ausgebildet und in dem Schwenk- und Schiebeblock unverdrehbar aufgenommen ist. Durch das Spannen der Klemmschraube 50 wird der Schwenk- und Schiebeblock 36 auf dem Längsstab 30 in dessen Längsrichtung festgelegt und zwar nicht nur durch Reibsitz, sondern durch formschlüssigen Eingriff. Der formschlüssige Eingriff ist dadurch gewährleistet, daß an der Klemmplatte 48 Rippen 54 durch Prägung gebildet sind, welche in Vertiefungen 56 des Längsstabs 30 eingreifen können, wenn der Schwenk- und Schiebeblock 36 einmal in eine gewünschte Stellung gebracht ist und hierauf die Klemmschraube 50 angezogen wird.

Die Figur 6 läßt weiter erkennen, daß die Schenkel 34a mit ihren vorderen Enden 34aa von Schlitzen 36a aufgenommen und auf den Schäften der Klemmschraube 50 schwenkbar gelagert sind. Beim Anziehen der Klemmschraube 50 wird der Aufnahmeschlitz 36a eingeengt, so daß die Schwenkbarkeit der Schenkel 34a gegenüber den Schwenk- und Schiebeblöcken 36 und damit gegenüber dem Tragrahmen 20 unterdrückt wird. Selbstverständlich können auch an den Schenkelenden 34a und an den Begrenzungsflächen der Aufnahmeschlitze 36a Formschlußmittel vorgesehen sein in Form von Rippen und Ausnehmungen, die ein formschlüssiges Feststellen der Schenkel 34a gegenüber den Schwenk- und Schiebeblöcken 36 gestatten.

Wie aus Figur 1 zu ersehen ist, dient der Tragrahmen 20 gleichzeitig als Träger für ein Bügelschloß 60, das aus einem Schloßbügel 60a und einem Schloßkörper 60b besteht. Der Schloßkörper 60b nimmt die beiden Schenkelenden des Schloßbügels 60a auf und kann von dem Schloßbügel 60a entweder vollständig getrennt werden oder soweit abgezogen werden, daß die Verbindung mit einem Bügelschenkel erhalten bleibt, die Verbindung mit dem Ende des anderen Schenkels sich aber löst, und der Schloßkörper 60b um den einen Bügelschenkel drehbar ist. Das Bügelschloß 60 ist - wie aus Figur 1 zu ersehen - von hinten, das heißt von rechts, in eine Führung (F) aufgenommen, die durch Querdrähte 62 gebildet ist. Das Schloß kann in diese Führung F soweit eingeschoben werden, bis der Schloßkörper 60b an einem Anschlagdraht 64 anschlägt. Dann rastet hinter dem Schloßkörper 60b gleichzeitig ein Sicherungselement 66 ein, so daß das Bügelschloß 60 sich nicht unbeabsichtigt aus der Führung F entfernen kann. Durch Auslenkung des Sicherungselements 66 kann das Bügelschloß 60 bei Wunsch entnommen werden. Man erkennt, daß das Schloß 60 unter der Tragebene des Tragrahmens 20 liegt, welcher durch die oberen Flächenbereiche der Längsstäbe 30,32 bestimmt ist, so daß das Bügelschloß 60 auch bei beladenem Gepäckträger an diesem angebracht und von diesem getrennt werden kann.

In Figur 1 ist durch Teleskophülsen 68 schematisch angedeutet, daß die Tragrahmenstützen 24 auch verlängerbar und verkürzbar sein können, was sich aber in vielen Fällen als nicht notwendig erweist.

In Abwandlung des soweit beschriebenen Ausführungsbeispiels ist es auch denkbar, in den Schwenk- und Schiebeblöcken 36 einzelne Schwenkarme zu lagern und diese einzelnen Schwenkarme an den beiden Gabelstäben des Gabelstabpaars 12 einzeln zu befestigen. Hierzu können die Enden der Einzelschwenkarme so abgewinkelt sein, daß sie annähernd parallel zu der Überbrückungslasche 42 sind, wobei Feinanpassungen durch Biegen vorgenommen werden können.

Alternativ zu der in Figur 6 dargestellten Ausführungsform ist es möglich, die Verrastungsrippen 54 statt an der Klemmplatte 48 auch an der der Klemmplatte 48 gegenüberliegenden Fläche der Schiebeführung 46 anzubringen. In diesem Fall werden die Verrastungskerben 56 in einer Längszone des Längsstabs 30 angebracht, welcher den Kerben 56 gemäß Figur 6 diametral gegenüberliegt. Während in Figuren 3 und 6 die Kerben 56 an der Außenseite des Längsstabs 30 angebracht sind, würden also bei dieser alternativen Ausführungsform die Verrastungskerben 56 an der Innenseite des Längsstabs 30 angeordnet sein. Die Verrastungskerben wären für einen, das Fahrrad von der Seite betrachtenden Betrachter im wesentlichen unsichtbar, so daß das Aussehen des Gepäckträgers verbessert und die Verletzungsgefahr für den Benutzer durch Berührung mit den Kerben vermindert würde. Auch die Klemmwirkung ist bei der alternativen Ausführungsform besser.

## Patentansprüche

1. Gepäckträger für ein Zweirad, umfassend einen Tragrahmen (20), mit dem Tragrahmen verbundene Tragrahmenstützen (22,24) zur Abstützung des Tragrahmens (20) am Zweiradrahmen (10), insbesondere in dessen Nabenbereich (14), und Verbindungsmittel (36,34,38) zwischen dem Tragrahmen (20) und einem Gabelstabpaar (12) des Zweiradrahmens (10), welches vom oberen Endbereich eines Sattelrohrs des Zweiradrahmens (10) zum Nabenbereich (14) des Zweiradrahmens (10) verläuft,
**dadurch gekennzeichnet,**
daß die Verbindungsmittel (36,34,38) mindestens ein Schwenkteil (34) umfassen, welches mit einem ersten Ende (34aa) an dem Tragrahmen (20) um eine zur vertikalen Längsmittelebene des Tragrahmens im wesentlichen orthogonale Schwenkachse (A) schwenkbar und in Längsrichtung (S) des Tragrahmens (20) gegenüber diesem verstellbar und feststellbar ist und welches mit einem zweiten Ende (34b) an dem Gabelstabpaar (12) festlegbar ist.

2. Gepäckträger nach Anspruch 1,
**dadurch gekennzeichnet,**
daß zwei Einzelschwenkarme vorgesehen sind, welche in Richtung der Schwenkachse (A) voneinander Abstand haben.

3. Gepäckträger nach Anspruch 2,
**dadurch gekennzeichnet,**
daß die zweiten Enden der Einzelschwenkarme an je einem Gabelstab des Gabelstabpaars (12) befestigbar sind.

4. Gepäckträger nach Anspruch 3,
**dadurch gekennzeichnet,**
daß die zweiten Enden der Einzelschwenkarme in eine zu der Ebene des Gabelstabpaars (12) annähernd parallele Ebene abgewinkelt sind und daß diese abgewinkelten zweiten Enden der Einzelschwenkarme mit Schraubenaufnahmelöchern versehen sind, welche in Flucht zu je einem Schraubenaufnahmeloch eines Gabelstabs bringbar und danach durch Schraubbolzen mit dem jeweiligen Gabelstab verbindbar sind.

5. Gepäckträger nach Anspruch 3 oder 4,
**dadurch gekennzeichnet,**
daß die abgewinkelten zweiten Enden der Einzelschwenkarme gegenüber der Hauptlängserstreckung der Einzelschwenkarme insbesondere durch Materialverbiegung schwenkbar sind.

6. Gepäckträger nach einem der Ansprüche 2 bis 5,
**dadurch gekennzeichnet,**
daß die Einzelschwenkarme mit ihren ersten Enden an Längsstäben (30) des Tragrahmens (20) angeordnet sind.

7. Gepäckträger nach Anspruch 1,
**dadurch gekennzeichnet,**
daß das Schwenkteil (34) von einem annähernd U-förmigen Schwenkbügel (34) gebildet ist, dessen Schenkel (34a) erste mit dem Tragrahmen (20) verbundene Enden (34aa) bilden und dessen Steg (34b) ein zweites mit dem Gabelstabpaar (12) verbindbares Ende bildet.

8. Gepäckträger nach Anspruch 7,
**dadurch gekennzeichnet,**
daß an dem Steg (34b) eine Montagelasche (38) zur Verbindung mit dem Gabelstabpaar (12) angebracht ist.

9. Gepäckträger nach Anspruch 8,
**dadurch gekennzeichnet,**
daß die Montagelasche (38) zur Verbindung mit einer Überbrückungslasche (42) des Gabelstabpaars (12) ausgebildet ist.

10. Gepäckträger nach Anspruch 9,
**dadurch gekennzeichnet,**
daß die Montagelasche (38) mit mindestens einem Befestigungsloch (38b) ausgeführt ist, welches in Flucht mit einem Befestigungsloch des Überbrückungsstegs (42) bringbar ist, worauf ein Befestigungsbolzen (40a) in die miteinander fluchtenden Befestigungslöcher (38b) einführbar ist.

11. Gepäckträger nach einem der Ansprüche 8 bis 10,
**dadurch gekennzeichnet,**
daß die Montagelasche (38) gegenüber der U-Bügelebene des U-bügelförmigen Schwenkteils (34) verschwenkbar ist.

12. Gepäckträger nach Anspruch 11,
**dadurch gekennzeichnet,**
daß die Montagelasche (38) auf dem Steg (34b) des U-Bügels (34) schwenkbar gelagert ist.

13. Gepäckträger nach Anspruch 12,
**dadurch gekennzeichnet,**
daß die Montagelasche (38) von einem doppeltgelegten Blechstreifen (38) gebildet ist, welcher im Scheitelbereich zu einem Lagerauge (38a) erweitert ist.

14. Gepäckträger nach einem der Ansprüche 1 bis 13,
**dadurch gekennzeichnet,**
daß das erste Ende (34aa) des Schwenkteils (34) in mindestens einem Schwenk- und Schiebeblock (36) schwenkbar gelagert ist und daß dieser Schwenk- und Schiebeblock (36) auf einem Längsstab (30) des Tragrahmens (20) verschiebbar und feststellbar geführt ist.

15. Gepäckträger nach Anspruch 14,
**dadurch gekennzeichnet,**
daß der Schwenk- und Schiebeblock (36) auf einem von zwei Längsbegrenzungsstäben (30) des Tragrahmens (20) angeordnet ist.

16. Gepäckträger nach einem der Ansprüche 14 und 15,
**dadurch gekennzeichnet,**
daß der Schwenk- und Schiebeblock (36) auf dem jeweiligen Längsstab (30) kraft- oder/und formschlüssig feststellbar ist.

17. Gepäckträger nach Anspruch 16,
**dadurch gekennzeichnet,**
daß der Schwenk- und Schiebeblock (36) eine teilweise offene Schiebeführung (46) für den jeweiligen Längsstab (30) aufweist und daß der Öffnungsbereich dieser Schiebeführung (36) durch eine Klemmplatte (48) abgedeckt ist, welche durch eine Klemmschraube (50) gegen den jeweiligen Längsstab (30) andrückbar ist.

18. Gepäckträger nach Anspruch 17,
**dadurch gekennzeichnet,**
daß an der Klemmplatte (48) oder dem Schwenkschiebeblock (36) einerseits und an dem jeweiligen Längsstab (30) andererseits zusammenwirkende Verrastungsmittel (54,56) angebracht sind.

19. Gepäckträger nach Anspruch 18,
**dadurch gekennzeichnet,**
daß die Verrastungsmittel (54,56) von Verrastungsrippen (54) an der Klemmplatte (48) bzw. dem Schwenkschiebeblock (36) und Verrastungskerben (56) an dem jeweiligen Längsstab (30) gebildet sind.

20. Gepäckträger nach einem der Ansprüche 14 bis 19,
**dadurch gekennzeichnet,**
daß das erste Ende (34aa) des Schwenkteils (34) in dem Schwenk- und Schiebeblock (36) um eine Achse (A) schwenkbar ist, welche von einer der Feststellung des Schwenk- und Schiebeblocks (36) auf dem jeweiligen Längsstab (30) dienenden Klemmschraube (50) gebildet ist.

21. Gepäckträger nach Anspruch 20,
**dadurch gekennzeichnet,**
daß das erste Ende (34aa) des Schwenkteils (34) in einem durch die Klemmschraube (50) einengbaren Aufnahmeschlitz (36a) des Schwenk- und Schiebeblocks (36) aufgenommen ist.

22. Gepäckträger nach einem der Ansprüche 20 und 21,
**dadurch gekennzeichnet,**
daß die Klemmschraube (50) mit einem Ende, insbesondere mit einem Schraubenkopf, an einer Klemmplatte (48) zum Eingriff mit dem jeweiligen Längsstab (30) angreift und mit ihrem anderen Ende, insbesondere mit einer Mutter (52), gegen eine Begrenzungswand eines das erste Ende (34aa) des Schwenkteils (34) aufnehmenden Schlitzes (36a) anliegt.

23. Gepäckträger nach einem der Ansprüche 1 bis 21,
**dadurch gekennzeichnet,**
daß die Tragrahmenstützen (22,24) starr mit dem Tragrahmen (20) verbunden sind und daß der Schwenkteil (34) um die Schwenkachse (A) betriebsmäßig schwenkbar oder gegen Schwenken feststellbar ist.

24. Gepäckträger nach einem der Ansprüche 1 bis 22,
**dadurch gekennzeichnet,**
daß die Tragrahmenstützen (22,24) mit dem Tragrahmen (20) gelenkig verbunden sind, nämlich gelenkig bezüglich Gelenkachsen, die orthogonal zur Längsmittelebene des Tragrahmens sind und daß der Schwenkteil (34) mit seinem ersten Ende (34aa) an dem Tragrahmen (20) betriebsmäßig gegen Schwenken festlegbar ist.

25. Gepäckträger nach einem der Ansprüche 1 bis 24,
**dadurch gekennzeichnet,**
daß der Tragrahmen (20) als Träger für ein Fahrradschloß (60), insbesondere ein Bügelschloß (60), ausgebildet ist.

26. Gepäckträger nach Anspruch 25,
**dadurch gekennzeichnet,**
daß an dem Tragrahmen (20) unterhalb von dessen Gepäcktragfläche eine Schiebeführung (F) für einen U-Bügel (60a) eines Bügelschlosses (60) angebracht ist, vorzugsweise so, daß das Bügelschloß (60) vom rückwärtigen Ende des Tragrahmens (20) her in Längsrichtung des Tragrahmens (20) in die Schiebeführung (F) einschiebbar ist bis zum Anschlagen eines Schloßkörpers (60b) des Bügelschlosses an einem Anschlag (64) des Tragrahmens (20) und vorzugsweise bis zum Einrasten einer das unbeabsichtigte Austreten des Bügelschlosses (60) aus der Schiebeführung (F) verhindernden Sicherung (66).

27. Gepäckträger nach einem der Ansprüche 1 bis 26,
**dadurch gekennzeichnet,**
daß die Tragrahmenstützen (22,24) längenveränderlich, insbesondere teleskopisch längenveränderlich und in der jeweils gewünschten Längeneinstellung feststellbar sind.

## Claims

1. A luggage carrier for a bicycle, comprising a supporting frame (20), with supporting frame supports (22, 24) connected with the supporting frame for supporting the supporting frame (20) on the bicycle frame (10), particularly in the area (14) for their wheel hub, and connecting means (36, 34, 38) between the supporting frame (20) and a pair of fork bars (12) of the bicycle frame (10) which extends from the upper end region of a saddle tube of the bicycle frame (10) to the hub area (14) of the bicycle frame (10), characterized in that the connection means (36, 34, 38) comprise at least one swivelling part (34) which is swivellable with a first end (34aa) on the supporting frame (20) around a swivelling axis (A) substantially orthogonal to the vertical longitudinal central plane of the supporting frame, and adjustable and securable in the longitudinal direction (S) of the supporting frame (20) relative to said frame, and which can be secured by a second end (34b) on the pair of fork bars (12).

2. A luggage carrier according to claim 1, characterized in that two individual swivelling arms are provided which are spaced from each other in the direction of the swivelling axis (A).

3. A luggage carrier according to claim 2, characterized in that the second ends of the individual swivelling arms are securable on a respective fork bar of the pair of fork bars (12).

4. A luggage carrier according to claim 3, characterized in that the second ends of the individual swivelling arms are angled into a plane approximately parallel with the plane of the pair of fork bars (12), and in that these angled second ends of the individual swivelling arms are provided with holes for deceiving screws which can be brought in alignment with a respective screw receiving hole of a fork bar and can be subsequently connected with the respective fork bar by screw bolts.

5. A luggage carrier according to either claim 3 or 4, characterized in that the angled second ends of the individual swivelling arms are swivellable relative to the main longitudinal extension of the individual swivelling arms, particularly by material bending.

6. A luggage carrier according to one of claims 2 to 5, characterized in that the individual swivelling arms are arranged with their first ends on longitudinal bars (30) of the supporting frame (20).

7. A luggage carrier according to claim 1, characterized in that the swivelling part (34) is formed by an approximately U-shaped swivelling shackle (34), the legs (34a) of which form first ends (34aa) connected with the supporting frame (20), and the web (34b) of which forms a second end connectable with the pair of fork bars (12).

8. A luggage carrier according to claim 7, characterized in that a mounting bracket (38) is mounted on the web (34b) for connection with the pair of fork bars (12).

9. A luggage carrier according to claim 8, characterized in that the mounting bracket (38) is designed for connection with a bridging web (42) of the pair of fork bars (12).

10. A luggage carrier according to claim 9, characterized in that the mounting bracket (38) is designed with at least one fixing hole (38b) which can be brought in alignment with a fixing hole of the bridging web (42), whereupon a securing bolt (40a) can be inserted into the fixing holes (38b) aligned on one another.

11. A luggage carrier according to one of claims 8 to 10, characterized in that the mounting bracket (38) is swivellable relative to the stirrup plane of the stirrup-shaped swivelling part (34).

12. A luggage carrier according to claim 11, characterized in that the mounting bracket (38) is swivellably mounted on the web (34b) of the stirrup (34).

13. A luggage carrier according to claim 12, characterized in that the mounting bracket (38) is formed from a twin-lay metal strip (38) which is widened in the crown area into a bearing eye (38a).

14. A luggage carrier according to one of claims 1 to 13, characterized in that the first end (34aa) of the swivelling part (34) is swivellably mounted in at least one swivelling and sliding unit (36) and in that this swivelling and sliding unit (36) is slidably and securably guided on a longitudinal bar (30) of the supporting frame (20).

15. A luggage carrier according to claim 14, characterized in that the swivelling and sliding unit (36) is mounted on one of two longitudinally delimiting bars (30) of the supporting frame (20).

16. A luggage carrier according to one of claims 14 and 15 characterized in that the swivelling and sliding unit (36) can be secured by force-fit and/or positively on the respective longitudinal bar (30).

17. A luggage carrier according to claim 16, characterized in that the swivelling and sliding unit (36) has a partly open sliding guide (46) for the respective longitudinal bar (36), and in that the opening region of this sliding guide (36) is covered by a clamping plate (48) which can be applied by means of a clamping screw (50) against the respective longitudinal bar (30).

18. A luggage carrier according to claim 17, characterized in that the clamping plate (48) or the swivelling and sliding unit (36) on the one hand, and the respective longitudinal bar (30) on the other hand, have cooperating locking means (54, 56) fitted on them.

19. A luggage carrier according to claim 18, characterized in that the locking means (54, 56) are formed by engagement ribs (54) on the clamping plate (48) and the swivelling respectively and sliding unit (36) and engagement notchs (56) on the respective longitudinal bar (30).

20. A luggage carrier according to one of claims 14 to 19, characterized in that the first end (34aa) of the swivelling part (34) in the swivelling and sliding unit (36) is swivellable about an axis (A) which is formed by a clamping screw (50) used for securing the swivelling and sliding unit (36) on the respective longitudinal bar (30).

21. A luggage carrier according to claim 20, characterized in that the first end (34aa) of the swivelling part (34) is housed in a receiving slot (36a) of the swivelling and sliding unit (36) which can be compressed by the clamping screw (50).

22. A luggage carrier according to either claim 20 or 21, characterized in that the clamping screw (50) engages by one end, particularly with a screw head, on a clamping plate (48) for engagement with the respective longitudinal bar (30), and applies by its other end, particularly with a nut (52) against a limiting wall of a slot (36a) which receives the first end (34aa) of the swivelling part (34).

23. A luggage carrier according to one of claims 1 to 21, characterized in that the supporting frame supports (22, 24) are rigidly connected with the supporting frame (20), and in that the swivelling part (34) is swivellable as required around the swivelling axis (A) or securable against swivelling.

24. A luggage carrier according to one of claims 1 to 22, characterized in that the supporting frame supports (22, 24) are hingeably connected with the supporting frame (20), namely hingeably relative to articulation axes which are orthogonal to the longitudinal central plane of the supporting frame, and in that the swivelling part (34) can be secured as desired with its first end (34aa) on the supporting frame (20) against swivelling.

25. A luggage carrier according to one of claims 1 to 24, characterized in that the supporting frame (20) is designed as a support of a bicycle lock (60) particularly a clip lock (60).

26. A luggage carrier according to claim 25, characterized in that, mounted on the supporting frame (20) under its luggage carrier surface, is a sliding guide (F) for a u-shaped shackle (60a) of a clip lock (60), preferably in such a manner that the clip lock (60) can be pushed in from the rear end of the supporting frame (20) in longitudinal direction of the supporting frame (20) into the sliding guide (F) until a lock body (60b) of the clip lock comes to act on a stop (64) of the supporting frame (20) and preferably until the engagement of a security device (66) preventing the unintended issuing of the clip lock (60) out of the sliding guide (F).

27. A luggage carrier according to one of claims 1 to 26, characterized in that the supporting frame supports (22, 24) are adjustable in length, particularly telescopically adjustable in length, and can be secured in the length setting as respectively desired.

## Revendications

1. Porte-bagages pour un véhicule à deux roues, comprenant un cadre porteur (20), des montants (22, 24) du cadre porteur reliés au cadre porteur pour l'appui du cadre porteur (20) sur le cadre (10) du véhicule à deux roues, en particulier dans la zone de son moyeu (14), et des moyens de liaison (36, 34, 38) disposés entre le cadre porteur (20) et une paire de bras de la fourche (12) du cadre (10) du véhicule à deux roues, qui s'étend de la zone terminale supérieure d'un tube de selle du cadre (10) du véhicule à deux roues jusqu'à la zone du moyeu (14) du cadre (10) du véhicule à deux roues, caractérisé en ce que les moyens de liaison (36, 34, 38) comprennent au moins une partie pivotante (34) qui est susceptible de pivoter, par une première extrémité (34aa), sur le cadre porteur (20), autour d'un axe de pivotement (A) sensiblement orthogonal au plan médian longitudinal vertical du cadre porteur et qui peut être déplacée dans la direction longitudinale (S) du cadre porteur (20) et fixée sur lui, et qui peut être fixée, par une deuxième extrémité (34b) sur la paire de bras de la fourche (12).

2. Porte-bagages selon la revendication 1, caractérisé en ce que sont prévus deux bras pivotants isolés montés à distance l'un de l'autre dans la direction de l'axe de pivotement (A).

3. Porte-bagages selon la revendication 2, caractérisé en ce que les deuxièmes extrémités des bras pivotants isolés peuvent être fixées, chacune, sur un bras de fourche de la paire de bras de la fourche (12).

4. Porte-bagages selon la revendication 3, caractérisé en ce que les deuxièmes extrémités des bras pivotants isolés sont coudées dans un plan approximativement parallèle au plan de la paire de bras de la fourche (12) et en ce que ces deuxièmes extrémités coudées des bras pivotants isolés sont pourvues de perçages de logement pour vis qui peuvent être amenés en alignement avec un perçage de logement pour vis correspondant d'un bras de fourche, et peuvent être reliés, ensuite, au bras de fourche correspondant au moyen de boulons filetés.

5. Porte-bagages selon la revendication 3 ou 4, caractérisé en ce que les deuxièmes extrémités coudées des bras pivotants isolés sont susceptibles de pivoter par rapport à la longueur principale des bras pivotants isolés, en particulier par déformation de la matière.

6. Porte-bagages selon l'une des revendications 2 à 5, caractérisé en ce que les bras pivotants isolés sont disposés, par leurs premières extrémités, sur des tiges longitudinales (30) du cadre porteur (20).

7. Porte-bagages selon la revendication 1, caractérisé en ce que la partie pivotante (34) est formée par un étrier pivotant (34) approximativement en forme de U, dont les branches (34a) forment des premières extrémités (34aa) reliées au cadre porteur (20) et dont la barrette transversale (34b) forme une deuxième extrémité susceptible d'être reliée à la paire de bras de la fourche (12).

8. Porte-bagages selon la revendication 7, caractérisé en ce qu'est disposée, sur la barrette transversale (34b), une patte de montage (38) pour la liaison avec la paire de bras de la fourche (12).

9. Porte-bagages selon la revendication 8, caractérisé en ce que la patte de montage (38) est conçue pour la liaison avec une patte formant pont (42) de la paire de bras de la fourche (12).

10. Porte-bagages selon la revendication 9, caractérisé en ce que la patte de montage (38) présente au moins un perçage de fixation (38b), qui est susceptible d'être mis en alignement avec un perçage de fixation de la pièce formant pont (42), un boulon de fixation (40a) pouvant ensuite être introduit dans les perçages de fixation (38b) alignés l'un avec l'autre.

11. Porte-bagages selon l'une des revendications 8 à 10, caractérisé en ce que la patte de montage (38) est susceptible de pivoter par rapport au plan de l'étrier en U de la partie pivotante (34) en forme d'étrier en U.

12. Porte-bagages selon la revendication 11, caractérisé en ce que la patte de montage (38) est montée pivotante sur la barrette transversale (34b) de l'étrier en U (34).

13. Porte-bagages selon la revendication 12, caractérisé en ce que la patte de montage (38) est formée par une bande de tôle (38) mise à double, qui s'élargit, dans la zone du sommet pour former un oeil d'appui (38a).

14. Porte-bagages selon l'une des revendications 1 à 13, caractérisé en ce que la première extrémité (34aa) de la partie pivotante (34) est montée pivotante dans au moins un bloc (36) de pivotement et de déplacement et en ce que ce bloc (36) de pivotement et de déplacement est monté de façon mobile et fixable sur une tige longitudinale (30) du cadre porteur (20).

15. Porte-bagages selon la revendication 14, caractérisé en ce que le bloc (36) de pivotement et de déplacement est disposé sur l'une des deux tiges de délimitation longitudinales (30) du cadre porteur (20).

16. Porte-bagages selon l'une des revendications 14 et 15, caractérisé en ce que le bloc (36) de pivotement et de déplacement est susceptible d'être fixé sur la tige longitudinale (30) associée par assemblage par force ou par complémentarité de formes.

17. Porte-bagages selon la revendication 16, caractérisé en ce que le bloc (36) de pivotement et de déplacement présente un guidage en coulissement (46) partiellement ouvert destiné à la tige longitudinale (30) associée et en ce que la zone d'ouverture de ce guidage en coulissement (36) est recouverte par une plaque de blocage (48), qui peut être appuyée, au moyen d'une vis de blocage (50), contre la tige longitudinale (30) associée.

18. Porte-bagages selon la revendication 17, caractérisé en ce que des moyens d'encliquetage (54, 56) coopérant sont prévus sur la plaque de blocage (48) ou sur le bloc (36) de pivotement et de déplacement d'une part et sur la tige longitudinale (30) associée d'autre part.

19. Porte-bagages selon la revendication 18, caractérisé en ce que les moyens d'encliquetage (54, 56) sont constitués par des nervures d'encliquetage (54) présentes sur la plaque de blocage (48) et/ou sur le bloc (36) de pivotement et de déplacement et par des encoches d'encliquetage (56) présentes sur la tige longitudinale (30) associée.

20. Porte-bagages selon l'une des revendications 14 à 19, caractérisé en ce que la première extrémité (34aa) de la partie pivotante (34) est susceptible de pivoter, dans le bloc (36) de pivotement et de déplacement, autour d'un axe (A), qui est constitué par une vis de blocage (50) servant à la fixation du bloc (36) de pivotement et de déplacement sur la tige longitudinale (30).

21. Porte-bagages selon la revendication 20, caractérisé en ce que la première extrémité (34aa) de la partie pivotante (34) est reçue dans une fente (36a) du bloc (36) de pivotement et de déplacement pouvant être resserrée par la vis de blocage (50).

22. Porte-bagages selon l'une des revendications 20 et 21, caractérisé en ce que la vis de blocage (50) s'applique par une extrémité, en particulier par une tête de vis, sur une plaque de blocage (48), afin de saisir la tige longitudinale (30) associée et, par son autre extrémité, en particulier par un écrou (52), contre une paroi de limitation d'une fente (36a) logeant la première extrémité (34aa) de la partie pivotante (34).

23. Porte-bagages selon l'une des revendications 1 à 21, caractérisé en ce que les montants (22, 24) du cadre porteur sont liés de façon rigide avec le cadre porteur (20) et en ce que la partie pivotante (34), en fonctionnement normal, est susceptible de pivoter autour d'un axe de pivotement (A) ou peut être empêchée de pivoter.

24. Porte-bagages selon l'une des revendications 1 à 22, caractérisé en ce que les montants (22, 24) du cadre porteur sont articulés sur le cadre porteur (20), à savoir de façon articulée vis-à-vis d'axes d'articulation qui sont orthogonaux au plan médian longitudinal du cadre porteur, et en ce que la première extrémité (34aa) de la partie pivotante (34), en fonctionnement normal, peut être empêchée de pivoter sur le cadre porteur (20).

25. Porte-bagages selon l'une des revendications 1 à 24, caractérisé en ce que le cadre porteur (20) est conçu pour servir de support à un cadenas (60) de bicyclette, en particulier un cadenas en étrier (60).

26. Porte-bagages selon la revendication 25, caractérisé en ce qu'est monté, sur le cadre porteur (20), sous sa surface destinée au porte-bagages, un guidage coulissant (F) pour un étrier en U (60a) d'un cadenas en étrier (60), de préférence de telle sorte que le cadenas en étrier (60) puisse être enfilé, par l'extrémité arrière du cadre porteur (20), dans la direction longitudinale du cadre porteur (20), dans le guidage coulissant (F), jusqu'à l'arrivée en butée d'un corps de cadenas (60b) du cadenas en étrier sur une butée (64) du cadre porteur et, de préférence, jusqu'à l'enclenchement d'un système de sécurité (66) empêchant le cadenas en étrier (60) de s'échapper intempestivement du guidage coulissant (F).

27. Porte-bagages selon l'une des revendications 1 à 26, caractérisé en ce que la longueur des montants (22, 24) du cadre porteur peut être modifiée, en particulier de façon téléscopique, et les montants peuvent être fixés à la longueur désirée.
